# EUROPEAN PATENT SPECIFICATION

(11) **EP 2 628 103 B1**
(45) Date of publication and mention of the grant of the patent: **05.12.2018**
(21) Application number: 11833140.4
(22) Date of filing: 05.10.2011
(51) Int. Cl.: G01B 21/32, G06F 17/50

(54) **DISPLACEMENT GENERATOR FOR FATIGUE ANALYSIS OF FLOATING PRODUCTION AND STORAGE UNIT PROCESS AND UTILITY PIPING**
VERSCHIEBUNGSGENERATOR ZUR ANALYSE DER MATERIALERMÜDUNG EINER SCHWIMMENDEN PRODUKTION SOWIE SPEICHEREINHEITSPROZESS UND HILFSGERÄTERÖHREN DAFÜR
GÉNÉRATEUR DE DÉPLACEMENT POUR L'ANALYSE DE LA FATIGUE D'UNE PRODUCTION FLOTTANTE ET PROCÉDÉ D'UNITÉ DE STOCKAGE ET TUYAUTERIE UTILITAIRE

(30) Priority: 12.10.2010 US 902736
(43) Date of publication of application: 21.08.2013
(73) Proprietor: Kellogg Brown & Root LLC, Houston, Texas 77002 (US)
(72) Inventor: ROBLETO, Robert, Aurelius, Houston TX 77035-6006 (US)
(74) Representative: Weickmann & Weickmann PartmbB
(86) International application number: PCT/US2011/054888
(87) International publication number: WO 2012/051019

(56) References cited:
- US-A1- 2010 161 248
- US-B2- 7 538 979
- T. Terpstra ET AL: "FPSO Design and Conversion: A Designer's Approach. OTC 13210", , 30 April 2001 (2001-04-30), pages 1-21, XP055086904, Houston, Texas Retrieved from the Internet: URL:http://www.google.nl/url?sa=t&rct=j&q= &esrc=s&source=web&cd=1&ved=0CCwQFjAA&url= http%3A%2F%2Fwww.gustomsc.com%2Findex.php% 2Fzoo%2Freference-list%2Fdoc_download%2F13 4-fpso-design-and-conversion-a-designer-s- approach&ei=3A16Uqv4OsGshQeJnIG4Bg&usg=AFQ jCNGF2eoLIIUn1Mf3aYvh3LJXLLjV4w&bvm=bv.559 80276,d.ZG [retrieved on 2013-11-06]
- Gregg W Baumann: "LINEAR STRUCTURAL STRESS ANALYSIS OF A HULL GIRDER PENETRATION AND A SHORT LONGITUDINAL BULKHEAD USING FINITE ELEMENT MODELING", Thesis Naval Postgraduate School, 1 June 1997 (1997-06-01), pages FP + i-ix + 1 - 4, XP055086910, Monterey, California Retrieved from the Internet: URL:http://www.google.nl/url?sa=t&rct=j&q= &esrc=s&source=web&cd=1&ved=0CCwQFjAA&url= http%3A%2F%2Fwww.dtic.mil%2Fcgi-bin%2FGetT RDoc%3FAD%3DADA330994&ei=mxN6Uu7_FYerhAfI8 oCgCw&usg=AFQjCNERJ_NzZMSgWsSIO18INdd01q2B 6g&bvm=bv.55980276,d.ZG4 [retrieved on 2013-11-06]
- MACMILLAN A: "EFFECTIVE FPSO HULL DESIGN USES COMBINED APPROACH", OIL AND GAS JOURNAL, PENNWELL, HOUSTON, TX, US, vol. 99, no. 24, 11 June 2001 (2001-06-11) , pages 72-78, XP001073368, ISSN: 0030-1388
- TERPSTRA T. ET AL.: 'FPSO Design and Conversion: A Designer's Approach. OTC 13210', [Online] 30 April 2001 - 03 May 2001, pages 1 - 21, XP055086904
- BAUMANN G.W.: 'LINEAR STRUCTURAL STRESS ANALYSIS OF A HULL GIRDER PENETRATION AND A SHORT LONGITUDINAL BULKHEAD USING FINITE ELEMENT MODELING' THESIS, [Online] June 1997, pages 4, 23, 29 - 30, XP055086910 Retrieved from the Internet: <URL:http://www.google.nl/url?sa=t&rct=j&q= &esrc=s&source=web&cd=1&ved=0CCwQFjAA&url=h ttp%3A%2F%2Fwww.dtic.mil%2Fcgi-bin%2FGetTRD oc%3FAD%3DADA330994&ei=mxN6Uu7_FYerhAfI8oCg Cw&usg=AFQjCNERJ_NzZMSgWsSIO18INdd01q2B6g&b vm=bv.55980276,d.ZG4> [retrieved on 2012-02-22]
- DET NORSKE VERITAS: 'FATIGUE ASSESSMENT OF SHIP STRUCTURES. CLASSIFICATION NOTES NO. 30.7', [Online] June 2010, pages 9, 27 - 28, 38, 40, XP055086912 Retrieved from the Internet: <URL:http://exchange.dnv.com/publishing/CN/ CN30-7.pdf> [retrieved on 2012-02-22]
- ABS: 'Guide for SPECTRAL-BASED FATIGUE ANALYSIS FOR FLOATING PRODUCTION, STORAGE AND OFFLOADING (FSPO) INSTALLATIONS', [Online] May 2010, pages I - VI, 1 - 39, XP055086916 Retrieved from the Internet: <URL:http://www.eagle.org/eagleExternalPort alWEB/ShowProperty/BEA%20Repository/Rules&G uides/Current/104_SFAforFloatingOffshoreStr uctures/Pub104_OffshoreSFA_Guide> [retrieved on 2012-02-22]

## Description

### BACKGROUND OF THE INVENTION

### Field of the Invention

Embodiments described herein generally relate to fatigue analysis. More particularly, embodiments described herein relate to performing fatigue analysis of a Floating Production Storage and Offloading (FPSO) unit's process and utility piping.

### Description of the Related Art

Floating Production Storage and Offloading (FPSO) units have been designed to receive, process, and store hydrocarbons produced from nearby platforms or subsea templates. FPSO units can be constructed by converting an existing floating vessel, for example an oil tanker, or can be constructed as a vessel built specially for the application. In either case, fatigue analysis of process and utility piping located on the FPSO unit is performed as part of the design process to properly size and configure the piping and associated restraints.

To perform fatigue analysis on a FPSO unit, deflections due to the motion of the FPSO unit while at sea are estimated for each pipe restraint location. Typically, the piping is modeled as multiple beam segments, each segment supported at each end. The beam segments are configured within the model to approximate the piping restraint locations for the process and utility piping. The beam segments are excited by simulated motion that approximates the effect of the FPSO unit loading conditions. From the response of each beam segment, the associated deflections for each end of a beam segment or restraint location are estimated.

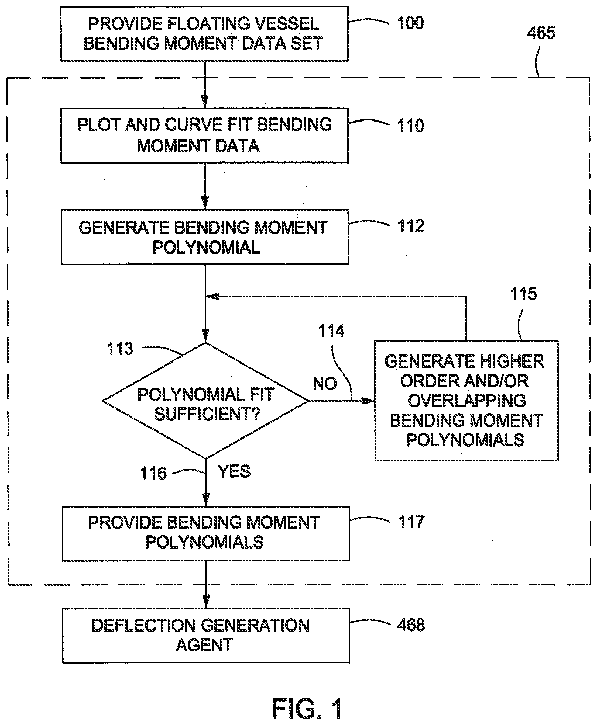

Such modeling process, however, can be time consuming and error prone. The errors are typically a result of: data entry errors, the floating vessel being designed separately from the piping and restraint locations; the floating vessel design analysis being performed at discrete points about the floating vessel; the discrete points being located at relatively large distances from one another compared to the distances between the piping restraint locations; and the floating vessel design analysis deflection results having little or no obvious relation to the deflections at the various process and utility piping restraint locations.
An article with the title "FPSO Design and Conversion: A Designer's Approach" by T. Terpstra et al., deals with the design of new FPSOs in comparison with the conversion of existing trading tankers into an FPSO, concerning the integration of topsides and the hull design. Under the headline "Fatigue Criteria", particular differences between a tanker and an FPSO are considered which have an impact upon the fatigue design. Information on a fatigue analysis for the hull of the respective vessel is given. It is noted that analysis software for hull fatigue is calibrated against experience, that only limited FPSO experience is available and that tankers have the ability to avoid bad weather and thus avoid being exposed to the environment assumed in the analysis assumptions. It is referred to simplified methods that are useful as they can be performed rapidly, but which have limitations such as being based on a simple beam bending theory. Figure 1 exemplifies a simplified hull design procedure for an FPSO, providing for an interaction between the topsides design and the hull design. Table 10 gives values for fatigue factors, distinguishing between "below splash zone" and "above splash zone", so that it appears that these design fatigue factors concern the hull as well.
A thesis with the title "Linear structural stress analysis of a hull girder penetration and a short longitudinal bulkhead using finite element modeling" by Gregg W. Baumann, deals with hull design of a vessel applying a simple beam bending theory. Disclosed is a method which calculates a response of the entire hull due to bending caused by a longitudinal distribution of load. By integrating the loading along the lengths of the ship, the resulting bending moment as a function of a length is obtained. By further integrations hull slope and hull deflection are determined.

There is a continuing need, therefore, for improved systems and methods for estimating process and utility piping restraint location deflections, and analyzing fatigue using the estimated deflections while improving the overall analysis efficiency for the design of a FPSO unit process and utility piping. To this end, the method defined in claim 1 and the system defined in claim 10 are provided. Preferred embodiments are defined in the dependent claims.

### BRIEF DESCRIPTION OF THE DRAWINGS

So that the manner in which the features of the present invention can be understood in detail, a more particular description of the invention defined in the claims may be had by reference to embodiments, some of which are illustrated in the appended drawings. It is to be noted, however, that the appended drawings illustrate only typical embodiments of this invention and are therefore not to be considered limiting of its scope.
Figure 1 depicts a representative decision tree for generating one or more bending moment polynomials.
Figure 2 depicts a representative decision tree for generating slope and displacement polynomials.
Figure 3 depicts a representative decision tree for generating deflections and performing fatigue analysis.
Figure 4 depicts a representative system for performing fatigue analysis for process and utility piping on a floating vessel.
Figure 5 depicts a schematic side view of an illustrative Floating Production Storage and Offloading unit ("FPSO").
Figure 6 depicts a schematic top view of the representative FPSO unit of Figure 5 showing a representative utility pipe run along a portion of the FPSO unit.
Figure 7 depicts a representative fatigue analysis data table.
Figure 8 depicts a portion of a routine for determining integration constants for slope polynomials associated with an example of the formulation.

### DETAILED DESCRIPTION

As will be described in more detail below, a method for performing a fatigue analysis for process and utility piping on a FPSO unit are provided. The method includes generating one or more displacement polynomials from bending moments calculated for a floating vessel, generating deflections for process and utility piping restraint locations on the floating vessel using the displacement polynomials, and performing fatigue analyses for the process and utility piping using the deflections.

Figure 1 depicts a representative decision tree for generating one or more bending moment polynomials. A floating vessel bending moment data set can be provided as at 100, and plotted as at 110. One or more curves can be fit to the plot of the bending moment data as at 110, and one or more initial bending moment polynomials can be generated from the one or more plots of the bending moment data as at 112. If the fit of a plot of the initial bending moment polynomial to an associated plot of the floating vessel bending moment data set is not sufficient as at 114, a higher order polynomial can be generated as at 115 until the plot of the increasingly higher order bending moment polynomial sufficiently fits the plot of the floating vessel bending moment data set as at 116. If an increase in the order of the polynomial does not provide a sufficient fit between the bending moment polynomial and the floating vessel bending moment data set, one or more additional overlapping bending moment polynomials can be generated as at 115 until a combination of portions of the two or more bending moment polynomials, of the same or varying order, sufficiently fit the plot of the floating vessel bending moment data set as at 116.

The floating vessel bending moment data set can be provided as at 100 from a naval architect fatigue analysis table associated with the floating vessel. For example, bending moment tables are typically generated by a naval architect during the floating vessel design stage. The bending moment tables can contain the calculated bending moments at various points throughout the floating vessel structure. The points where bending moment or other calculations are performed are typically chosen about the hull longitudinal axis points of deflection.

The floating vessel bending moment data set can be provided from the floating vessel's hull moment of inertia information. For example, a model can be constructed and a first estimate for bending moments can be determined. In one or more embodiments, the model can be a beam with a length equal to the floating vessel length and moments of inertia equal to that of the floating vessel. To estimate the bending moments, the beam can be constrained at a location, for example at the middle of the ship in the amidships region. The constrained beam can be excited simulated forces that approximate the forces from wave action against the floating vessel. Using known techniques, the bending moments can be estimated from the beam's response to the forces.

Plotting and curve fitting the bending moment data 110 and polynomial generation 112, 115 can be performed using the provided floating vessel bending moment data 100 and known techniques. For example, a software package with the trade name MICROSOFT EXCEL contains a graphics capability that can generate a polynomial from a plot of data. The software package with the trade name MATLAB can also be used to plot and curve fit the bending moment data set 110 and generate at least one bending moment polynomial 112. For example, for the provided floating vessel bending moment data set 100, MATLAB can be executed to plot, curve fit 110, and determine at least one least-squares fit polynomial 112 from the plot of the provided bending moment data set 100.

To determine bending moment polynomial fit sufficiency as at 113, statistical measures of the polynomial fit can be used. Statistical measures of the polynomial fit accuracy can include the coefficient of determination (R2), the observed *f-*value for the fit, the observed *t*-values/confidence intervals for the coefficients, and other known statistical techniques. The values of the statistical measures can be calculated using known techniques and the calculated statistical values can be used to determine fit sufficiency as at 113. For example, the user can decide that an appropriate measure for bending moment polynomial fit sufficiency can be a calculated coefficient of determination equal to or greater than 0.98. The user can calculate the coefficient of determination using known techniques. If the calculated coefficient of determination is not greater than or equal to 0.98, the user can generate a higher order polynomial and/or one or more additional overlapping bending moment polynomials as at 115 until a combination of portions of the one or more bending moment polynomials sufficiently fit the plot of the floating vessel bending moment data set as at 116.

Each bending moment polynomial can be a first order, second order, third order, forth order, fifth order, sixth order, seventh order, eighth order, ninth order, tenth order or higher order polynomial. The order of each bending moment polynomial can be selected to achieve a sufficient polynomial fit to at least a portion of the plot of the bending moment data set as at 116. For example, a fourth order bending moment polynomial can be generated and the bending moment polynomial fit sufficiency can be determined using one or more embodiments described herein. If the polynomial fit is not sufficient, a higher order bending moment polynomial can be generated and the fit sufficiency of the higher order bending moment polynomial can be determined as at 113.

If the plot of the bending moment polynomial does not sufficiently fit the plot of the bending moment data set as at 114, in lieu of or in conjunction with raising the polynomial order, one or more overlapping bending moment polynomials can be generated such that a plot of a combination of at least a portion of two or more overlapping bending moment polynomials can represent the plot of the entire bending moment data set. An overlapping bending moment polynomial is defined as a polynomial whose plot overlaps with at least a portion of the plot of at least one other bending moment polynomial. For example, a plot of a combination of a portion of more than one polynomial may be required to properly fit the plot of the entire bending moment data set. For the bending moment data set, the data in the vicinity of the bow, the data in the vicinity of the amidships region, and the data in the vicinity of the aft of the floating vessel can be separately curve fit to produce three distinct bending moment polynomials. At least a portion of the plot of each of the three distinct bending moment polynomials can be combined to describe the entire plot of the bending moment data set. The plot of at least one of the distinct bending moment polynomials can overlap a least a portion of the plot of at least one other distinct bending moment polynomial. The overlapping section can correspond to a solution set over which both polynomials return the same values.

The plot of the bending moment data in the vicinity of an aft region of the floating vessel can include the bending moments associated with the region between the aft of the floating vessel and about 50 meters from the aft of the floating vessel as measured from the aft of the floating vessel along the floating vessel beam toward the bow. The bending moment data in the vicinity of the aft of the floating vessel can include the bending moments associate with the region between the aft of the floating vessel and about 10 meters, about 20 meters, about 30 meters, about 40 meters, about 50 meters, about 60 meters or more from the aft of the floating vessel. The bending moment data in the vicinity of the aft of the floating vessel can include the bending moments associated with the region between the aft of the floating vessel and about 5%, about 10%, about 15%, about 20%, about 25%, about 30%, and about 35% or more of the distance along the full length of the floating vessel beam as measured from the aft of the floating vessel.

The plot of the bending moment data in the vicinity of a bow region of the floating vessel can include the bending moments associated with the region between about 275 meters from the aft of the floating vessel and the bow of the floating vessel. The bending moment data in the vicinity of the bow of the floating vessel can include the bending moments associate with the region between about 250 meters, about 260 meters, about 270 meters, about 280 meters, about 290 meters, and about 300 meters or more from the aft of the floating vessel and the bow of the floating vessel. The bending moment data in the vicinity of the bow of the floating vessel can include the bending moments associate with the region between about 50%, about 60%, about 70% about 80%, and about 90% or more of the distance along the full length of the floating vessel beam as measured from the aft of the floating vessel and the bow of the floating vessel.

The plot of the bending moment data in the vicinity of an amidships region can include the bending moments associated with the region amongst and between the vicinity of the aft of the floating vessel and the vicinity of the bow of the floating vessel. The resultant one or more sufficiently fit bending moment polynomials can be provided for slope and displacement polynomial generation as at 117.

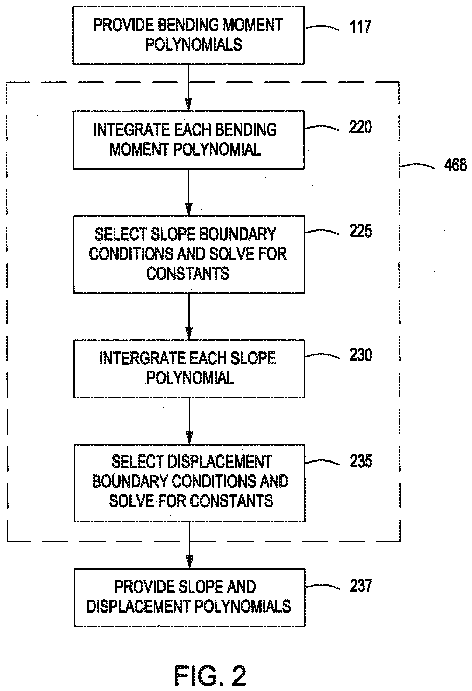

Figure 2 depicts a representative decision tree for generating slope and displacement polynomials. One or more slope polynomials can be generated by integrating each of the one or more bending moment polynomials provided at 117 and solving for the slope polynomial constants. One or more displacement polynomials can be generated by integrating each of the one or more slope polynomials and solving for the displacement polynomial integration constants.

The one or more bending moment polynomials can be integrated using known techniques to generate one or more slope polynomials as at 220. Each of the one or more slope polynomials will contain at least one unknown integration constant as is understood in the mathematical arts. To solve for the one or more unknown integration constants, slope boundary conditions can be chosen and the integration constants determined as at 225. The one or more slope polynomial integration constants can be solved for any specified slope. For example, the one or more slope polynomial integration constants can be solved where the naval architect's fatigue analysis table indicates a location about the floating vessel where the slope is equal to zero.

The solved slope polynomials can be integrated 230 to generate one or more displacement polynomials as at 230. The displacement polynomial integration constants can be solved by selecting the appropriate displacement boundary conditions as at 235. The one or more slope polynomials and the one or more displacement polynomials can be provided for further analyses as at 237.

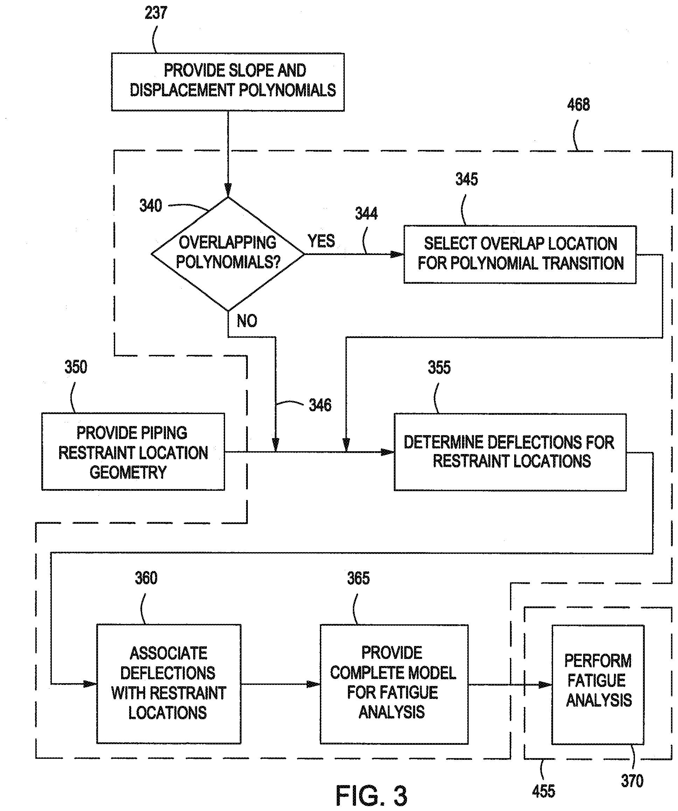

Figure 3 depicts a representative decision tree for generating deflections and performing fatigue analysis. Generating deflections and performing fatigue analyses can include providing one or more slope polynomials and one or more displacement polynomials, providing process and utility piping geometry including piping restraint location geometry; determining the deflections at each restraint location using the slope and displacement polynomials; associating the deflections with each restraint location; providing the deflections for fatigue analysis; and performing a fatigue analysis. The one or more slope polynomials and the one or more displacement polynomials can be provided as at 237. If the plots of two or more slope polynomials overlap as at 344, a slope polynomial overlap location can be selected for slope polynomial transition as at 345. Where only one slope and one displacement polynomial is provided, the polynomials can be provided without selecting one or more overlap locations. At a minimum, piping restraint location geometry can be provided as at 350 and the deflections for each restraint location can be calculated from the slope and displacement polynomials as at 355. The deflections for each restraint location can be calculated by solving at least one slope polynomial and at least one displacement polynomial for the slope and displacement values at each restraint location. For example, a first piping restraint location can be expressed in terms of x, y, z coordinates and at least one of the slope polynomials and at least one of the displacement polynomials can be solved using the first piping restraint location as values for the slope polynomial and displacement polynomial x, y, z, variables. The calculated deflections can be associated with the restraint locations as at 360. A complete model of process and utility piping design information, restraint location geometry, and associated deflections can be provided as at 365 and a fatigue analysis for the process and utility piping can be performed as at 370. The fatigue analysis can be used for example to improve the life of the piping and attached equipment and prevent catastrophic failures.

The plot of two or more slope polynomials can overlap to create one or more slope polynomial overlapping sections as at 344. A point along each slope polynomial overlapping section corresponding to a particular x,y,z location on the floating vessel can be selected as the location on the floating vessel where slope polynomial calculations transition from one slope polynomial to another during slope calculations as at 345. For example, if each slope polynomial contains only one variable "x", each slope polynomial can be solved for varying "x" values. In the solution set where the values for each overlapping slope polynomial gives the same answer for a subset of "x", an arbitrary value "a" from the subset of "x" can be chosen as the location on the floating vessel where slope calculations can transition from one slope polynomial to another slope polynomial.

Piping restraint location geometry can be provided for determining deflections for restraint locations as at 350. For example, an initial design for the process and utility piping can be provided. The associated piping restraint geometry can be included and/or generated. The various locations for each restraint location can be provided as at 350 and the deflections at each restraint location can be determined as at 355. The deflections at each restraint location can be solved by determining the values from the one or more slope and the one or more displacement polynomials at each of the restraint locations. The complete model of process and utility piping design information, restraint location geometry, and associated deflections can be provided as at 365 and the fatigue analysis for the process and utility piping can be performed as at 370.

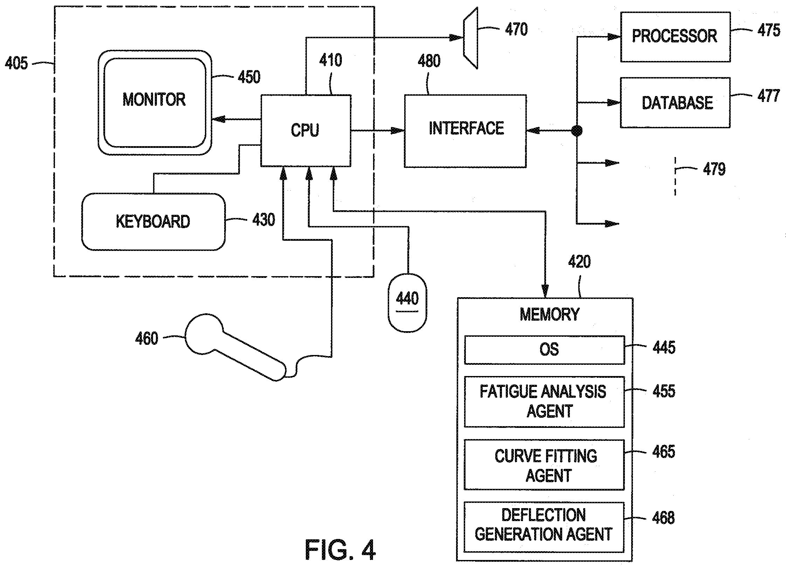

Figure 4 depicts a representative system for performing fatigue analysis for process and utility piping on a floating vessel. A computer 405 can include a central processing unit 410, an input device or keyboard 430, and a monitor 450 on which a software package can be executed. The computer 405 can include a memory 420 as well as additional input and output devices, for example a mouse 440, a microphone 460, and a speaker 470. The mouse 440, the microphone 460, and the speaker 470 can be used for, among other purposes, universal access and voice recognition or commanding. The monitor 450 can be touch-sensitive to operate as an input device as well as a display device.

The computer 405 can interface with database 477, support computer or processor 475, other databases and/or other processors 479, or the Internet via the interface 480. It should be understood that the term "interface" does not indicate a limitation to interfaces that use only Ethernet connections and refers to all possible external interfaces, wired or wireless. It should be understood that database 477, processor 475, and/or other databases and/or other processors 479 are not limited to interfacing with computer 405 using network interface 480 and can interface with computer 405 in any means sufficient to create a communications path between the computer 405 and database 477, processor 475, and/or other databases and/or other processors 479. For example, in one or more embodiments, database 477 can interface with computer 405 via a USB interface while processor 475 can interface via some other high-speed data bus without using the network interface 480. The computer 405, processor 475, and other processors 479 can be configured as part of a multiprocessor distributed system.

It should be understood that even though the computer 405 is shown as a platform on which the methods described can be performed, the methods described could be performed on any platform. For example, the many and varied embodiments described herein can be used on any device that has computing capability. For example, the computing capability can include the capability to access any communications bus protocols such that the user can interact with the many and varied computers 405, processors 475, and/or other databases and processors 479 that can be distributed or otherwise assembled. These devices can include, but are not limited to and are presented for illustrative purposes only: supercomputers, arrayed server networks, arrayed memory networks, arrayed computer networks, distributed server networks, distributed memory networks, distributed computer networks, desktop personal computers (PCs), tablet PCs, hand held PCs, laptops, devices sold under the trademark names BLACKBERRY™ or PALM™, cellular phones, hand held music players, or any other device or system with computing capabilities.

Still referring to Figure 4, programs can be stored in the memory 420 and the central processing unit 410 can work in concert with at least the memory 420, the input device 430 and the output device 450 to perform tasks for the user. The memory 420 may include any number and combination of memory devices, without limitation, as is currently available or can become available in the art. Memory devices can include without limitation, and for illustrative purposes only: database 477, other databases and/or processors 479, hard drives, disk drives, random access memory, read only memory, electronically erasable programmable read only memory, flash memory, thumb drive memory, and any other memory device. Those skilled in the art are familiar with the many variations that can be employed using memory devices and no limitations should be imposed on the embodiments herein due to memory device configurations and/or algorithm prosecution techniques.

The memory 420 can store an operating system (OS) 445, a fatigue analysis agent 455, a curve fitting agent 465, and a deflection generation agent 468. The operating system 445 can facilitate control and execution of software using the CPU 410. Any available operating system can be used in this manner including WINDOWS™, LINUX™, Apple OS™, UNIX™, and the like.

The CPU 410 may execute either from a user request or automatically. The CPU 410 may execute the fatigue analysis agent 455, the curve fitting agent 465, and/or the deflection generation agent 468 when a user requests, among other requests, to perform a fatigue analysis on a pipe run or a piping system disposed on the floating vessel. For example, the fatigue analysis can be performed by providing a floating vessel bending moment data set; generating one or more bending moment polynomials from the floating vessel bending moment data set; generating a slope polynomial from each of the bending moment polynomials by integrating each of the one or more bending moment polynomials; generating a displacement polynomial from each of the slope polynomials by integrating each of the one or more slope polynomials; solving the slope polynomial integration constants; solving the displacement polynomial integration constants; providing process and utility piping geometry including piping restraint location geometry; determining the deflections at each restraint location using the slope and displacement polynomials; associating the deflections with each restraint location; providing the deflections for fatigue analysis; and performing the fatigue analysis.

It should be noted that the fatigue analysis agent 455, the curve fitting agent 465, and/or the deflection generation agent 468 can be fully autonomous code sets, partially integrated code sets, or fully integrated code sets and no limitations should be construed from the depiction of the fatigue analysis agent 455, the curve fitting agent 465, and/or the deflection generation agent 468 as separate agents. It should be noted that it is not necessary to execute the fatigue analysis agent 455, the curve fitting agent 465, and/or the deflection generation agent 468 simultaneously nor is it necessary to execute the three agents on the same computer 405. The fatigue analysis agent 455 can be a fatigue analysis computer programs known in the art. Fatigue analysis can be performed by providing the fatigue analysis computer program with the complete model of process and utility piping design information, restraint location geometry, and associated deflections.

Referring to Figure 1 and Figure 4, the fatigue analysis can be performed using computer 405, memory 420, the operating system 445, the fatigue analysis agent 455, the curve fitting agent 465, and the deflection generation agent 468. The bending moment data set can be provided as at 100 by entering the data into a spreadsheet or database for communication with the curve fitting agent 465. The floating vessel bending moment data set can be provided from an existing spreadsheet or existing database for communication with the curve fitting agent 465.

Plotting and curve fitting the bending moment data 110 and polynomial generation 112, 115 can be performed using the provided floating vessel bending moment data 100 and known techniques and/or curve fitting agent 465. For example, the curve fitting agent 465 can execute the software package with the trade name MICROSOFT EXCEL to generate at least one bending moment polynomial 112 that can represent the plot of the bending moment data set 110. The curve fitting agent 465 can use orthogonal polynomial curve fitting techniques to generate at least one associated bending moment polynomial 112. The curve fitting agent 465 can execute the software package with the trade name MATLAB to generate at least one bending moment polynomial 112.

The criteria for polynomial fit sufficiency 113 can be predetermined and set within the curve fitting agent 465. A given value for the coefficient of determination (R²), the observed *f*-value for the fit, the observed *t*-values/confidence intervals for the coefficients, or other known fit measures can be set within the curve fitting agent 465 as a threshold by which polynomial fit sufficiency 113 can be determined. The curve fitting agent 465 can iterate on one or more of the embodiments described herein, until the predetermined criteria is met. The curve fitting agent 465 can provide the one or more derived bending moment polynomials that meet the predetermined fit sufficiency criteria to the deflection generation agent 468. For example, if the predetermined criteria for the coefficient of determination (R²) is set to greater than 0.97, the curve fitting agent 465 can generate higher and higher order bending moment polynomials until the criteria is met. In the event that the criteria is not met, the curve fitting agent 465 can generate one or more overlapping bending moment polynomials 115, until the predetermined criteria can be met for an appropriate portion of the provided floating vessel bending moment data set 100.

To determine bending moment polynomial fit sufficiency as at 113, the curve fitting agent 465 can determine the mismatch or residuals of the bending moment polynomial values to the provided floating vessel bending moment data. A plot of the residuals versus the polynomial values can show patterns or trends. The degree of patterns or trends can be a measure of the quality of the fit, where no trend can equal a good fit. In one or more embodiments, a normal-probability plot of the residuals can be used. The fit of the bending moment polynomial values to the provided floating vessel bending moment data can be considered sufficient when the normal-probability plot of the residuals approximates a straight line. The curve fitting agent 465 can iterate on one or more of the embodiments described herein, until there are no trends in the plot of the residual versus the polynomial values. The curve fitting agent 465 can iterate on one or more of the embodiments described herein, until the normal-probability plot of the residual approximates a straight line, within user chosen limits. The curve fitting agent 465 can provide the sufficiently fit one or more bending moment polynomials to the deflection generation agent 468.

To determine bending moment polynomial fit sufficiency, visual comparisons and/or other known techniques can be used. In one or more embodiments, visual comparisons can be performed. For example, when the curve fitting agent 465 generates a first bending moment polynomial, the curve fitting agent 465 can plot the values for the first bending moment polynomial and overlay the plot on a plot of the bending moment data set. The differences between the bending moment polynomial plot and the bending moment data can be visually assessed. The visual assessment may be performed by the user. The visual assessment may be performed by the curve fitting agent 465. It should be understood that the curve fitting agent 465 cannot visualize in the same manner a human visualizes but the curve fitting agent 465 can perform the visual assessment using techniques known in the art, for example using artificial intelligence routines. Based on user judgment or predetermined comparison criteria of the sufficiency of the polynomial fit, the curve fitting agent 465 can generate another polynomial or the user can direct the curve fitting agent 465 to generate another polynomial. In either case, the curve fitting agent 465 can generate a higher order bending moment polynomial and/or an overlapping bending moment polynomial to better approximate the fit of the polynomial values to the bending moment data set. The higher order bending moment polynomials and/or the overlapping bending moment polynomials can be overlaid on the plot of the bending moment data set and reassessed for fit sufficiency as at 113. The analysis cycle can continue until the polynomial fit meet the appropriate criteria. The sufficiently fit bending moment polynomials can be provided to the deflection generation agent 468.

The one or more bending moment polynomials can be provided to the deflection generation agent 468 either automatically or manually. For example, the bending moment polynomials can be provided as at 117 to the deflection generation agent 468 within the memory 420. The bending moment polynomials can be manually provided by the user to the deflection generation agent 468 using the keyboard 430. Other known data entry and programming techniques can be used to provide the bending moment polynomials as at 117 to the deflection generation agent 468.

Referring to Figure 2 and Figure 4, to generate deflections the one or more bending moment polynomials can be provided as at 117 to the deflection generation agent 468. The one or more bending moment polynomials can be integrated as at 220 to determine one or more slope polynomials for the floating vessel. Slope boundary conditions can be selected and the one or more slope polynomial integration constants can be solved as at 225. The one or more slope polynomials can be integrated as at 230 to determine one or more displacement polynomials. The displacement boundary conditions can be selected. The one or more displacement polynomial integration constants can be solved as at 235.

Referring to Figure 3 and Figure 4, the one or more slope polynomials and the one or more displacement polynomials can be provided for deflection determination as at 237. If the plots of two or more slope polynomials overlap as at 344, a slope polynomial overlap location can be selected for slope polynomial transition as at 345. If the plots of two or more displacement polynomials overlap as at 344, a displacement polynomial overlap location can be selected for displacement polynomial transition as at 345. Where only one slope and one displacement polynomial is provided, the polynomials can be provided without selecting overlap locations. At a minimum, piping restraint location geometry can be provided as at 350 and the deflections for each restraint location can be calculated as at 355. The calculated deflections can be associated with the appropriate restraint locations as at 360. The complete model of process and utility piping design information, restraint location geometry, and associated deflections can be provided as at 365 to the fatigue analysis agent 455 and the fatigue analysis for the process and utility piping can be performed as at 370.

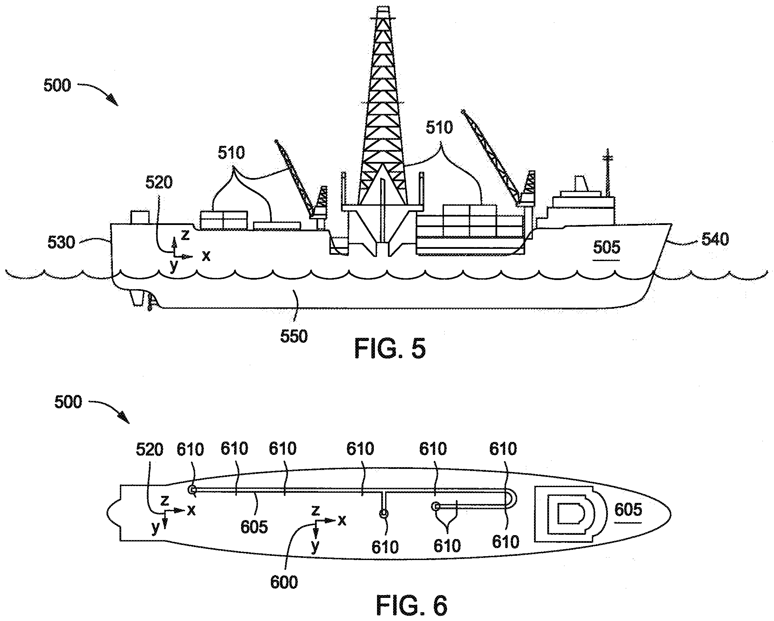

Figure 5 depicts a schematic side view of an illustrative Floating Production Storage and Offloading unit ("FPSO"). The FPSO unit 500 can include a floating vessel 505 with one or more production and processing equipment 510 disposed thereon. The vessel 505 can have a bow end 540, an aft end 530, and an amidships region 550. The production and processing equipment 510 can include processing equipment and systems known in the art for producing and processing hydrocarbons, water, and any other fluids or solids known in the art of oil and gas processing, including but not limited to two phase separation unit equipment, three phase separation unit equipment, gas dehydration unit equipment, thermal conditioning equipment, and/or sulfur recovery unit equipment. The materials to be processed and/or stored can be distributed between and throughout the equipment 510, and on and off the FPSO unit 500, via a process and utility piping system, not shown.

A coordinate system 520 can be identified for the floating vessel 505. The origin of the coordinate system 520 can be located anywhere about the floating vessel 505. Design calculations for the floating vessel 505, such as bending moments, can be determined at various calculation points about the floating vessel 505. The various calculation points can be located with reference to the origin of the floating vessel coordinate system 520. For example, bending moments can be determined about a point within a first bulkhead and the point can be located relative to the floating vessel coordinate system 520.

The design calculations can be associated with determining the sea-applied bending moments the floating vessel 505 can experience while at sea. During the design of a floating vessel 505, bending moment calculations are typically made at various locations about the vessel 505 for two extremes: when a crest of a wave is in the amidships region 550 and when a trough of a wave is in the amidships region 550. In the first extreme, where the crest of the wave is in the amidships region 550, there is an excess of weight at the floating vessel ends 530, 540 and an excess of buoyancy in the amidships region 550. There is a tendency for the floating vessel ends 530, 540 to droop relative to the amidships region 550. The tendency to droop relative to the amidships region 550 is defined as hogging. In the second extreme, when the trough of the wave is in the amidships region 550, there is an excess of weight in the amidships region 550 and an excess of buoyancy at the floating vessel ends 530, 540. There is a tendency for the amidships region 550 to droop relative to the floating vessel ends 530, 540. This tendency to droop relative to the floating vessel ends 530, 540 is defined as sagging. The calculations associated with the hogging and sagging can be expressed in terms of bending moments, rotational forces, and displacements. The results of the calculations can be documented in naval architect fatigue analysis tables that are known in the art.

The deflections the vessel 505 experiences can include hogging deflections with at least one orthogonal and/or rotational component, sagging deflections with at least one orthogonal and/or rotational component, and/or other defections with at least one orthogonal and/or rotational component. Determining deflections and entering those deflections into one or more known programs can be performed. For example, using data from the naval architect's fatigue analysis table for the floating vessel 505, one or more curves can be fit to a plot of one or more sagging bending moment data sets. The values of the one or more sagging bending moment data sets can correspond to the sagging bending moments calculated at one or more points about the floating vessel 505. One or more sagging bending moment polynomials can be determined and can represent one or more plots of the one or more sagging bending moment data sets. In one or more embodiments, one or more curves can be fit to a plot of one or more hogging bending moment data sets, values of which can correspond to the hogging bending moments at one or more points about the floating vessel 505. One or more hogging bending moment polynomials can be determined and can represent one or more plots of the one or more hogging bending moment data sets. In one or more embodiments, one or more curves can be fit to a plot of any floating vessel 505 bending moment data set. One or more bending moment polynomials can be determined and can represent the plot of the bending moment data set.

The one or more sagging bending moment polynomials can be integrated and the associated integration constants can be determined to derive one or more sagging slope polynomials for the floating vessel 505. The one or more sagging slope polynomials can be integrated and the associated integration constants can be determined to derive one or more sagging displacement polynomials for the floating vessel 505. The derived sagging slope and displacement polynomials can be used to calculate the sagging deflections at any given point on the FPSO unit 500 using one or more embodiments described herein.

The one or more hogging bending moment polynomials can be integrated and the associated integration constants can be determined to derive one or more hogging slope polynomials for the floating vessel 505. The one or more hogging slope polynomials can be integrated and the associated integration constants can be determined to derive one or more hogging displacement polynomials for the floating vessel 505. The derived hogging slope and displacement polynomials can be used to calculate the hogging deflections at any given point on the FPSO unit 500 using one or more embodiments described herein. The hogging and sagging deflections can be used to perform fatigue analysis using one or more embodiments described herein.

Figure 6 depicts a schematic top view of the representative FPSO unit including a representative utility pipe run along a portion of the FPSO unit according to one or more embodiments described. The representative utility pipe run can include piping 605 and piping restraints 610. The piping 605 can be used to distribute hydrocarbons, other fluids, and/or solids on and off of, between, and throughout the vessel 505 and between and throughout the production and processing equipment 510 with reference to Figure 5 above. Referring again to Figure 6, restraints 610 can secure the piping 605 to the vessel 505 at various restraint 610 locations. The various restraint 610 locations can be located with respect to an origin of a piping system coordinate system 600. The origin of the piping system coordinate system 600 can be located conveniently for piping layout and design purposes and does not have to be located at the origin of the floating vessel coordinate system 520.

A conversion between the piping system coordinate system 600 and the floating vessel coordinate system 520 can be performed as necessary. For example, the relative location of each restraint location 610 with respect to the origin of the piping system coordinate system 600 can be converted with respect to the origin of the floating vessel coordinate system 520 as appropriate for deflection determinations.

The bending moment data set from the naval architect's fatigue analysis table may have been generated with respect to the floating vessel coordinate system 520. The origin of the floating vessel coordinate system 520 may be different from the origin of the piping system coordinate system 600. The piping restraint locations 610 may be expressed relative to the piping system coordinate system 600. A conversion between the piping system coordinate system 600 and the floating vessel coordinate system 520 may be appropriate prior to calculating the deflections at one or more restraint locations 610 due to the differences in the coordinate system origins. The conversion can be performed using known techniques.

The one or more derived polynomials described above, with reference to Figure 5, can be used to calculate, at a minimum, the sagging and hogging deflections for each restraint location 610 along the pipe run 605. The deflection data can be provided, for example to the fatigue analysis agent 455, with reference to Figure 4 above, via the automated population of a data table compatible with the fatigue analysis agent 455, and the fatigue analysis can be run for at least each restraint location 610, referring again to Figure 6.

Still referring to Figure 6, using one or more embodiments herein described, a fatigue analysis can be performed on one or more pipe runs, portions thereof, or on an entire process and utility piping system, a portion of which can be depicted by the pipe run 605. For example, a first utility pipe run design can be provided and a first fatigue analysis can be performed to determine, at a minimum, if the restraint 610 locations for the first utility pipe run are properly positioned and/or if expansion joints, not shown, should be adjusted or added to the first utility pipe run. Design changes to the first utility pipe run design can be implemented based on the first fatigue analysis and a second fatigue analysis can be performed on the updated or second utility pipe run design. Iterative design and analyses cycles can be performed until satisfactory results can be achieved for the utility pipe run 605. Similarly, the design for the entire process and utility piping system for the FPSO unit 500 can be provided and fatigue analysis and design cycles can be iterated until satisfactory results can be achieved for the entire process and utility piping system and/or portions thereof.

### Example:

The foregoing discussion can be further described with reference to the following non-limiting, example.

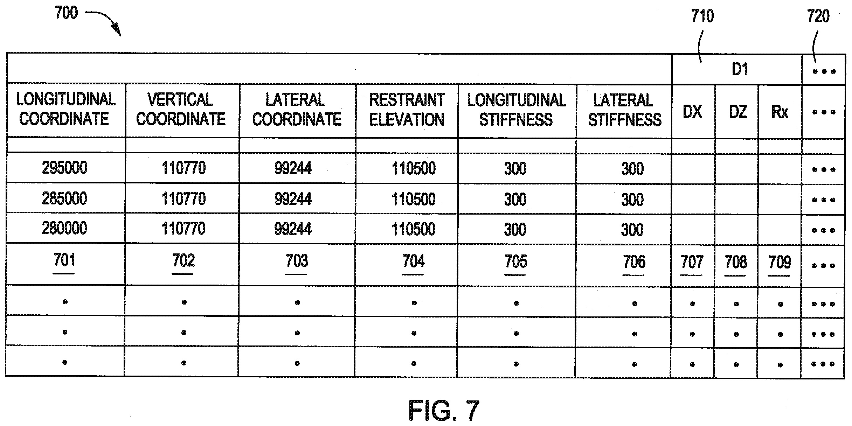

One or more embodiments of the present invention have been trialed on a project for an FPSO unit conversion. In this example, a program with the trade name CAESAR II was used to perform a fatigue analysis on the process and utility piping system design for the FPSO unit conversion. The FPSO unit piping geometry and restraint locations were entered into the CAESAR II program and a fatigue analysis data table or neutral file 700 was generated. Figure 7 depicts a representative fatigue analysis data table according to one or more embodiments described. The neutral file 700 included a tabular listing of the restraint locations, stiffness values, and several blank columns for populating estimated and/or calculated deflections.

The neutral file 700 contained the piping restraint location geometry 701, 702, 703, 704 in millimeters and stiffness values 705, 706 in units of Newton/millimeter. The geometry and stiffness values were populated in the table 700 using information from an initial process and utility piping design. The blank column 710 corresponds to the static sagging deflections and the blank column 720 corresponds to the static hogging deflections as well as all other deflections to be calculated and entered into the table 700. The displacements 707 and 708 are orthogonal displacements in the x and z-axis directions respectively. Rotation 709 is a slope component of the calculated deflection. The slope 709 is imparted about a given restraint location along the floating vessel y-axis, with x positive from the aft to the fore of the FPSO and where positive z extends into the sky above the FPSO.

The FPSO unit conversion vessel's naval architect bending moment data was entered into a curve fitting agent and a first set of bending moment polynomial curves was fit to the bending moment data. The sufficiency of the fit of the first bending moment polynomial was assessed using both an R² threshold value of 0.97 and visual inspection of any mismatches between the naval architect bending moment data and the plot of the first bending moment polynomial. Although the R² threshold was met, the visual inspection indicated mismatches between the naval architect bending moment data and the plot of the first set of bending moment polynomials. The mismatches occurred in the general vicinity of the aft of the FPSO unit and the bow of the FPSO unit.

To alleviate the observed mismatches, three overlapping curves were fit to the naval architect bending moment data. One of the curves was fit to a portion of the plot of the bending moment data associated with the bending moments in the vicinity of the aft of the FPSO unit. The plot of the bending moment data in the vicinity of the aft of the FPSO unit was associated with the bending moments in the region between the aft of the FPSO unit and about 50 meters from the aft of the FPSO unit as measured along the floating vessel beam toward the bow. One of the curves was fit to a portion of the plot of the bending moment data associated with the bending moments in the vicinity between the bow and the aft of the FPSO unit. The plot of the bending moment data between the bow and the aft of the FPSO unit was associated with the bending moments in the region from about 50 meters from the aft of the FPSO unit to about 275 meters from the aft of the FPSO unit. One of the curves was fit to a portion of the plot of the bending moment data associated with the bending moments in the vicinity of the bow of the FPSO unit. The plot of the bending moment data in the vicinity of the bow of the FPSO unit was associated with the bending moments in the region from about 275 meters from the aft of the FPSP unit to the bow of the FPSO unit.

Three tenth-order overlapping bending moment polynomials were generated. The three bending moment polynomials were plotted over the plot of the bending moment data. The fit of the combined portions of the three bending moment polynomials to the bending moment data was assessed using both an R2 threshold value of 0.97 and visual inspection. The fit was determined to be sufficient. The bending moment polynomials were integrated to determine the slope polynomials. The slope polynomials were integrated to determine the displacement polynomials. The slope polynomial and displacement polynomial integration constants were determined using the deflection generation agent and the appropriate boundary conditions for each slope and displacement polynomial.

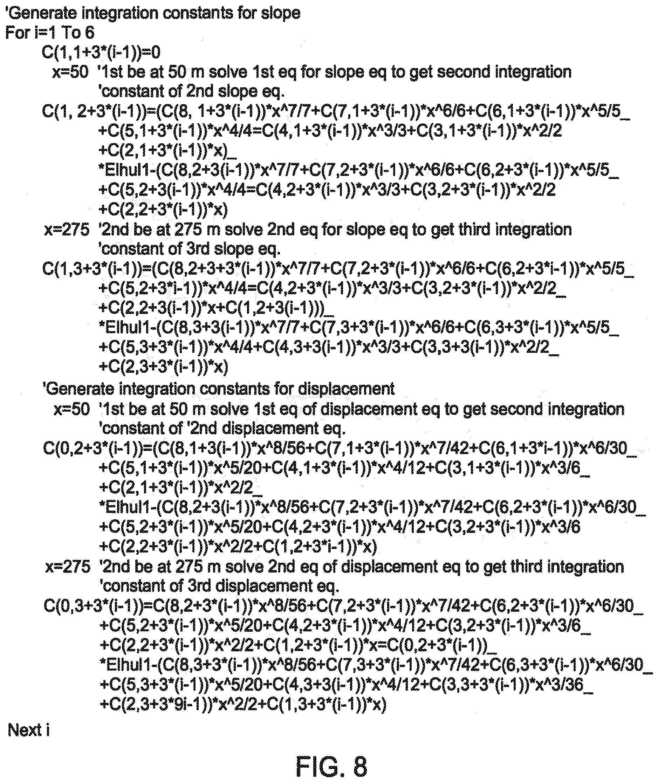

Figure 8 depicts a portion of a routine used to determine integration constants for slope and displacement polynomials associated with the example. Here, E is the modulus of elasticity of the hull material and I is the moment of inertia of the average cross section of the hull. Eihul1 is the name assigned in this example to the product of these two constants. The first constant was solved for the bending moment curve. Once the first formula was known, it was integrated to solve for the slope. The boundary conditions of the slope were used to solve for the slope integration constant. The slope was integrated and the boundary condition for displacement was used to generate the equation for displacement based on one unknown, the longitudinal location along the ship. The middle of the ship was chosen as the longitudinal location where the slope was zero and the displacement integration constant was solved.

Referring to Figure 4 and Figure 7, the neutral table 700 from the CAESAR II program was entered into the deflection generation agent 468. The deflections were determined for each restraint location in the neutral table 700 using the derived slope and displacement polynomials. The deflection generation agent 468 populated the neutral table with the calculated deflections. The completed neutral table was provided to the CAESAR II program and the fatigue analysis was performed. Design decisions were made and some restraint geometry was changed. The updated restraint geometry was incorporated into a new neutral file 700, the deflections were recalculated, and the fatigue analysis was re-run with satisfactory results. As the design activities continued through multiple cycles, any changes to the process and utility piping design were reassessed as appropriate using updated neutral tables 700 and the already developed polynomial equations. The ability to quickly analyze restraint locations and utility piping design layout saved significant resources over separately estimating and manually entering the deflections into a data table for use by a fatigue analysis program.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person with ordinary skill in the art.

While the foregoing is directed to embodiments of the present invention, other and further embodiments of the invention may be devised without departing from the scope thereof, and the scope thereof is determined by the claims that follow.

## Claims

1. A method for performing fatigue analysis for a given process and utility piping geometry having one or more restraint locations (610) disposed about a floating vessel (505), comprising:
generating (112) one or more bending moment polynomials from bending moment data associated with the floating vessel (505);
generating a slope polynomial from each of the bending moment polynomials by integrating (220) each of the one or more bending moment polynomials;
generating a displacement polynomial from each of the slope polynomials by integrating (230) each of the one or more slope polynomials;
solving (235) the slope polynomial integration constants;
solving (235) the displacement polynomial integration constants to provide (237) slope and displacement polynomials representing the floating vessel response to excitations while at sea;
determining (355) the deflections at each restraint location (610) of the process and utility piping (350) using the slope and displacement polynomials;
associating (360) the determined deflections with each restraint location (610); and
performing (370) a first fatigue analysis for the process and utility piping (350).

2. The method of claim 1 wherein a first bending moment polynomial is generated to approximate a plot of the bending moment data in the vicinity of an aft region of the floating vessel,
wherein a second bending moment polynomial is generated to approximate a plot of the bending moment data in the vicinity of a bow region of the floating vessel, and
wherein a third bending moment polynomial is generated to approximate a plot of the bending moment data in the vicinity of an amidships region of the floating vessel.

3. The method of claim 2 wherein a combination of a portion of a plot of the first bending moment polynomial, a portion of a plot of the second bending moment polynomial, and a portion of a plot of the third bending moment polynomial approximates a plot of the bending moment data associated with the floating vessel.

4. The method of claim 1 wherein determining the deflections at each restraint location comprises solving each slope polynomial for the slope values at each restraint location, and
solving each displacement polynomial for the displacement values at each restraint location.

5. The method of claim 1 further comprising:
updating the process and utility piping geometry and restraint locations based on the first fatigue analysis;
determining the deflections at each of the updated restraint locations;
associating the deflections with each of the updated restraint locations; and
performing a second fatigue analysis.

6. The method of claim 1 wherein generating at least one of the bending moment polynomials comprises fitting a curve to a plot of the bending moment data, and
generating a tenth order bending moment polynomial that approximates the curve.

7. The method of claim 1 wherein three or more bending moment polynomials are generated, and
at least a portion of a plot of two of the three or more bending moment polynomials overlap.

8. The method of claim 7 wherein determining the deflection at each restraint location comprises selecting one or more transition points for switching between polynomials for determining the deflections, and
determining the deflections at each restraint location, transitioning between polynomials according to the one or more transition points selected.

9. The method of claim 1 wherein associating the determined deflections with each restraint location comprises populating a fatigue analysis data table.

10. A system for performing fatigue analysis for a given process and utility piping geometry having one or more restraint locations (610) disposed about a floating vessel (505), comprising:
means (465) for generating (112) one or more bending moment polynomials from bending moment data associated with the floating vessel (505);
means (468) for generating a slope polynomial from each of the bending moment polynomials by integrating (220) each of the one or more bending moment polynomials;
means (468) for generating a displacement polynomial from each of the slope polynomials by integrating (230) each of the one or more slope polynomials;
means (468) for solving (235) the slope polynomial integration constants; and
means (468) for solving (235) the displacement polynomial integration constants to provide (237) slope and displacement polynomials representing the floating vessel response to excitations while at sea;
means (468) for determining (355) the deflections at each restraint location (610) of the process and utility piping (350) using the slope and displacement polynomials;
means (468) for associating (360) the determined deflections with each restraint location (610); and
means (455) for performing (370) a first fatigue analysis for the process and utility piping (350).

11. The system of claim 10 wherein the means for generating one or more bending moment polynomials from bending moment data associated with the floating vessel comprises:
means for generating a first bending moment polynomial to approximate a plot of the bending moment data in the vicinity of an aft region of the floating vessel,
means for generating a second bending moment polynomial to approximate a plot of the bending moment data in the vicinity of a bow region of the floating vessel, and
means for generating a third bending moment polynomial to approximate a plot of the bending moment data in the vicinity of an amidships region of the floating vessel.

12. The system of claim 10 wherein the means for determining the deflection at each restraint location comprises selecting one or more transition points for switching between polynomials, and
determining the deflections at each restraint location, transitioning between polynomials according to the one or more transition points selected.

13. The system of claim 10 wherein the means for determining the deflections at each restraint location comprises solving each slope polynomial for the slope values at each restraint location, and
solving each displacement polynomial for the displacement values at each restraint location.

14. The system of claim 10 further comprising:
means for updating the process and utility piping geometry based on the first fatigue analysis;
means for providing the updated utility piping restraint location geometry;
means for determining the deflections at each of the updated restraint locations;
means for associating the deflections with each of the updated restraint locations; and
means for performing an updated fatigue analysis.

## Patentansprüche

1. Verfahren zum Durchführen einer Ermüdungsanalyse für eine vorgegebene Prozess- und Versorgungs-Leitungsgeometrie mit einer oder mehreren Beschränkungspositionen (610), welche um ein schwimmendes Gefährt (505) herum angeordnet sind, umfassend:
Erzeugen (112) von einem oder mehreren Biegemoment-Polynomen aus Biegemoment-Daten, welche dem schwimmenden Gefährt (505) zugeordnet sind;
Erzeugen eines Neigungs-Polynoms aus jedem der Biegemoment-Polynome durch Integrieren (220) von jedem aus dem einen oder den mehreren Biegemoment-Polynomen;
Erzeugen eines Verlagerungs-Polynoms aus jedem der Neigungs-Polynome durch Integrieren (230) von jedem aus dem einen oder den mehreren Neigungs-Polynomen;
Lösen (235) der Neigungs-Polynom-Integrationskonstanten;
Lösen (235) der Verlagerungs-Polynom-Integrationskonstanten zum Bereitstellen (237) von Neigungs- und Verlagerungs-Polynomen, welche die Reaktion des schwimmenden Gefährts auf Anregungen repräsentieren, wenn es sich zur See befindet;
Bestimmen (355) der Deflektionen an jeder Beschränkungsposition (610) der Prozess- und Versorgungs-Leitung (350) unter Verwendung der Neigungs- und Verlagerungs-Polynome;
Zuordnen (360) der bestimmten Deflektionen zu jeder Beschränkungsposition (610); und
Durchführen (370) einer ersten Ermüdungsanalyse für die Prozess- und Versorgungs-Leitung (350).

2. Verfahren nach Anspruch 1, wobei ein erstes Biegemoment-Polynom erzeugt wird, um eine Darstellung der Biegemoment-Daten in der Nähe eines Heckbereichs des schwimmenden Gefährts anzunähern,
wobei ein zweites Biegemoment-Polynom erzeugt wird, um eine Darstellung der Biegemoment-Daten in der Nähe eines Bugbereichs des schwimmenden Gefährts anzunähern, und
wobei ein drittes Biegemoment-Polynom erzeugt wird, um eine Darstellung der Biegemoment-Daten in der Nähe eines Mittschiff-Bereichs des schwimmenden Gefährts anzunähern.

3. Verfahren nach Anspruch 2, wobei eine Kombination eines Abschnitts einer Darstellung des ersten Biegemoment-Polynoms, eines Abschnitts einer Darstellung des zweiten Biegemoment-Polynoms und eines Abschnitts einer Darstellung des dritten Biegemoment-Polynoms eine Darstellung der Biegemoment-Daten annähert, welche dem schwimmenden Gefährt zugeordnet sind.

4. Verfahren nach Anspruch 1, wobei das Bestimmen der Deflektionen an jeder Beschränkungsposition ein Lösen jedes Neigungs-Polynoms für die Neigungswerte an jeder Beschränkungsposition umfasst, sowie ein Lösen jedes Verlagerungs-Polynoms für die Verlagerungswerte an jeder Beschränkungsposition.

5. Verfahren nach Anspruch 1, ferner umfassend:
Aktualisieren der Prozess- und Versorgungs-Leitungsgeometrie und der Beschränkungspositionen auf Grundlage der ersten Ermüdungsanalyse;
Bestimmen der Deflektionen an jeder der aktualisierten Beschränkungspositionen;
Zuordnen der Deflektionen zu jeder der aktualisierten Beschränkungspositionen; und
Durchführen einer zweiten Ermüdungsanalyse.

6. Verfahren nach Anspruch 1, wobei das Erzeugen von wenigstens einem der Biegemoment-Polynome ein Anpassen einer Kurve auf eine Darstellung der Biegemoment-Daten umfasst, sowie
ein Erzeugen eines Biegemoment-Polynoms zehnter Ordnung, welches die Kurve annähert.

7. Verfahren nach Anspruch 1, wobei drei oder mehr Biegemoment-Polynome erzeugt werden, und
wenigstens ein Abschnitt von einer Darstellung von zwei der drei oder mehr Biegemoment-Polynome überlappen.

8. Verfahren nach Anspruch 7, wobei das Bestimmen der Deflektion an jeder Beschränkungsposition ein Auswählen von einem oder mehreren Übergangspunkten zum Umschalten zwischen Polynomen zum Bestimmen der Deflektionen umfasst, sowie
ein Bestimmen der Deflektionen an jeder Beschränkungsposition, wobei zwischen Polynomen gemäß dem einen oder den mehreren ausgewählten Übergangspunkten übergegangen wird.

9. Verfahren nach Anspruch 1, wobei das Zuordnen der bestimmten Deflektionen zu jeder Beschränkungsposition ein Bevölkern einer Ermüdungsanalyse-Datentabelle umfasst.

10. System zum Durchführen einer Ermüdungsanalyse für eine vorgegebene Prozess- und Versorgungs-Leitungsgeometrie mit einer oder mehreren Beschränkungspositionen (610), welche um ein schwimmendes Gefährt (505) herum angeordnet sind, umfassend:
Mittel (465) zum Erzeugen (112) von einem oder mehreren Biegemoment-Polynomen aus Biegemoment-Daten, welche dem schwimmenden Gefährt (505) zugeordnet sind;
Mittel (468) zum Erzeugen eines Neigungs-Polynoms aus jedem der Biegemoment-Polynome durch Integrieren (220) von jedem aus dem einen oder den mehreren Biegemoment-Polynomen;
Mittel (468) zum Erzeugen eines Verlagerungs-Polynoms aus jedem der Neigungs-Polynome durch Integrieren (230) von jedem aus dem einen oder den mehreren Neigungs-Polynomen;
Mittel (468) zum Lösen (235) der Neigungs-Polynom-Integrationskonstanten; und
Mittel (468) zum Lösen (235) der Verlagerungs-Polynom-Integrationskonstanten, um Neigungs- und Verlagerungs-Polynome bereitzustellen (237), welche die Reaktion des schwimmenden Gefährts auf Anregungen repräsentieren, wenn es sich zur See befindet;
Mittel (468) zum Bestimmen (355) der Deflektionen an jeder Beschränkungsposition (610) der Prozess- und Versorgungs-Leitung (350) unter Verwendung der Neigungs- und Verlagerungs-Polynome;
Mittel (468) zum Zuordnen (360) der bestimmten Deflektionen zu jeder Beschränkungsposition (610); und
Mittel (455) zum Durchführen (370) einer ersten Ermüdungsanalyse für die Prozess- und Versorgungs-Leitung (350).

11. System nach Anspruch 10, wobei die Mittel zum Erzeugen von einem oder mehreren Biegemoment-Polynomen aus Biegemoment-Daten, welche dem schwimmenden Gefährt zugeordnet sind, umfassen:
Mittel zum Erzeugen eines ersten Biegemoment-Polynoms, um eine Darstellung der Biegemoment-Daten in der Nähe eines Heckbereichs des schwimmenden Gefährts anzunähern,
Mittel zum Erzeugen eines zweiten Biegemoment-Polynoms, um eine Darstellung der Biegemoment-Daten in der Nähe eines Bugbereichs des schwimmenden Gefährts anzunähern, und
Mittel zum Erzeugen eines dritten Biegemoment-Polynoms, um eine Darstellung der Biegemoment-Daten in der Nähe eines Mittschiff-Bereichs des schwimmenden Gefährts anzunähern.

12. System nach Anspruch 10, wobei die Mittel zum Bestimmen der Deflektion an jeder Beschränkungsposition ein Auswählen von einem oder mehreren Übergangspunkten zum Umschalten zwischen Polynomen umfassen, sowie ein Bestimmen der Deflektionen an jeder Beschränkungsposition, wobei zwischen Polynomen gemäß dem einen oder den mehreren ausgewählten Übergangspunkten übergegangen wird.

13. System nach Anspruch 10, wobei die Mittel zum Bestimmen der Deflektionen an jeder Beschränkungsposition ein Lösen von jedem Neigungs-Polynom für die Neigungswerte an jeder Beschränkungsposition umfassen, sowie ein Lösen von jedem Verlagerungs-Polynom für die Verlagerungswerte an jeder Beschränkungsposition.

14. System nach Anspruch 10, ferner umfassend:
Mittel zum Aktualisieren der Prozess- und Versorgungs-Leitungsgeometrie auf Grundlage der ersten Ermüdungsanalyse;
Mittel zum Bereitstellen der aktualisierten Versorgungsleitung-Beschränkungspositions-Geometrie;
Mittel zum Bestimmen der Deflektionen an jeder der aktualisierten Beschränkungspositionen;
Mittel zum Zuordnen der Deflektionen zu jeder der aktualisierten Beschränkungspositionen; und
Mittel zum Durchführen einer aktualisierten Ermüdungsanalyse.

## Revendications

1. Procédé d'exécution d'analyse de fatigue pour une géométrie donnée de tuyauterie de traitement et d'alimentation comportant un ou plusieurs emplacements de retenue (610) disposés autour d'un vaisseau flottant (505), comprenant :
la génération (112) d'un ou plusieurs polynômes de moment de flexion à partir de données de moment de flexion associées au vaisseau flottant (505) ;
la génération d'un polynôme de pente à partir de chacun des polynômes de moment de flexion par l'intégration (220) de chacun de l'un ou plusieurs polynômes de moment de flexion ;
la génération d'un polynôme de déplacement à partir de chacun des polynômes de pente par l'intégration (230) de chacun de l'un ou plusieurs polynômes de pente ;
la résolution (235) des constantes d'intégration de polynômes de pente ;
la résolution (235) des constantes d'intégration de polynômes de déplacement pour fournir (237) des polynômes de pente et de déplacement représentant la réponse de vaisseau flottant à des excitations en mer ;
la détermination (355) des déviations à chaque emplacement de retenue (610) de la tuyauterie de traitement et d'alimentation (350) en utilisant les polynômes de pente et de déplacement ;
l'association (360) des déviations déterminées à chaque emplacement de retenue (610) ; et
l'exécution (370) d'une première analyse de fatigue pour la tuyauterie de traitement et d'alimentation (350).

2. Procédé selon la revendication 1, dans lequel un premier polynôme de moment de flexion est généré pour l'approximation d'un tracé des données de moment de flexion à proximité d'une région arrière du vaisseau flottant,
dans lequel un deuxième polynôme de moment de flexion est généré pour l'approximation d'un tracé des données de moment de flexion à proximité d'une région de proue du vaisseau flottant, et
dans lequel un troisième polynôme de moment de flexion est généré pour l'approximation d'un tracé des données de moment de flexion à proximité d'une région de milieu du vaisseau flottant.

3. Procédé selon la revendication 2, dans lequel une combinaison d'une portion d'un tracé du premier polynôme de moment de flexion, d'une portion d'un tracé du deuxième polynôme de moment de flexion, et d'une portion d'un tracé du troisième polynôme de moment de flexion approxime un tracé des données de moment de flexion associées au vaisseau flottant.

4. Procédé selon la revendication 1, dans lequel la détermination des déviations à chaque emplacement de retenue comprend la résolution de chaque polynôme de pente pour les valeurs de pente à chaque emplacement de retenue, et
la résolution de chaque polynôme de déplacement pour les valeurs de déplacement à chaque emplacement de retenue.

5. Procédé selon la revendication 1, comprenant en outre :
la mise à jour de la géométrie de tuyauterie de traitement et d'alimentation et des emplacements de retenue sur la base de la première analyse de fatigue ;
la détermination des déviations à chacun des emplacements de retenue mis à jour ;
l'association des déviations à chacun des emplacements de retenue mis à jour ; et
l'exécution d'une deuxième analyse de fatigue.

6. Procédé selon la revendication 1, dans lequel la génération d'au moins l'un des polynômes de moment de flexion comprend l'ajustement d'une courbe à un tracé des données de moment de flexion, et
la génération d'un polynôme de moment de flexion de dixième ordre qui approxime la courbe.

7. Procédé selon la revendication 1, dans lequel au moins trois polynômes de moment de flexion sont générés, et
au moins une portion d'un tracé de deux des au moins trois polynômes de moment de flexion présente un chevauchement.

8. Procédé selon la revendication 7, dans lequel la détermination de la déviation à chaque emplacement de retenue comprend la sélection d'au moins un point de transition pour la commutation entre des polynômes pour la détermination des déviations, et
la détermination des déviations à chaque emplacement de retenue en permutant entre des polynômes en fonction de l'au moins un point de transition sélectionné.

9. Procédé selon la revendication 1, dans lequel l'association des déviations déterminées à chaque emplacement de retenue comprend le remplissage d'un tableau de données d'analyse de fatigue.

10. Système d'exécution d'analyse de fatigue pour une géométrie donnée de tuyauterie de traitement et d'alimentation comportant un ou plusieurs emplacements de retenue (610) disposés autour d'un vaisseau flottant (505), comprenant :
des moyens (465) pour la génération (112) d'un ou plusieurs polynômes de moment de flexion à partir de données de moment de flexion associées au vaisseau flottant (505) ;
des moyens (468) pour la génération d'un polynôme de pente à partir de chacun des polynômes de moment de flexion par l'intégration (220) de chacun de l'un ou plusieurs polynômes de moment de flexion ;
des moyens (468) pour la génération d'un polynôme de déplacement à partir de chacun des polynômes de pente par l'intégration (230) de chacun de l'un ou plusieurs polynômes de pente ;
des moyens (468) pour la résolution (235) des constantes d'intégration de polynômes de pente ; et
des moyens (468) pour la résolution (235) des constantes d'intégration de polynômes de déplacement pour fournir (237) des polynômes de pente et de déplacement représentant la réponse de vaisseau flottant à des excitations en mer ;
des moyens (468) pour la détermination (355) des déviations à chaque emplacement de retenue (610) de la tuyauterie de traitement et d'alimentation (350) en utilisant les polynômes de pente et de déplacement ;
des moyens (468) pour l'association (360) des déviations déterminées à chaque emplacement de retenue (610) ; et
des moyens (455) pour l'exécution (370) d'une première analyse de fatigue pour la tuyauterie de traitement et d'alimentation (350).

11. Système selon la revendication 10, dans lequel les moyens pour la génération d'un ou plusieurs polynômes de moment de flexion à partir de données de moment de flexion associées au vaisseau flottant comprennent :
des moyens pour la génération d'un premier polynôme de moment de flexion pour l'approximation d'un tracé des données de moment de flexion à proximité d'une région arrière du vaisseau flottant,
des moyens pour la génération d'un deuxième polynôme de moment de flexion pour l'approximation d'un tracé des données de moment de flexion à proximité d'une région de proue du vaisseau flottant, et
des moyens pour la génération d'un troisième polynôme de moment de flexion pour l'approximation d'un tracé des données de moment de flexion à proximité d'une région de milieu du vaisseau flottant.

12. Système selon la revendication 10, dans lequel les moyens pour la détermination de la déviation à chaque emplacement de retenue comprennent la sélection d'au moins un point de transition pour la commutation entre des polynômes, et
la détermination des déviations à chaque emplacement de retenue en permutant entre des polynômes en fonction de l'un ou plusieurs points de transition sélectionnés.

13. Système selon la revendication 10, dans lequel les moyens pour la détermination des déviations à chaque emplacement de retenue comprennent la résolution de chaque polynôme de pente pour les valeurs de pente à chaque emplacement de retenue, et
la résolution de chaque polynôme de déplacement pour les valeurs de déplacement à chaque emplacement de retenue.

14. Système selon la revendication 10, comprenant en outre :
des moyens pour la mise à jour de la géométrie de tuyauterie de traitement et d'alimentation sur la base de la première analyse de fatigue ;
des moyens pour la fourniture de la géométrie mise à jour de tuyauterie d'alimentation et des emplacements de retenue mis à jour ;
des moyens pour la détermination des déviations à chacun des emplacements de retenue mis à jour ;
des moyens pour l'association des déviations à chacun des emplacements de retenue mis à jour ; et
des moyens pour l'exécution d'une analyse de fatigue mise à jour.
